# EUROPEAN PATENT SPECIFICATION

(11) **EP 4 080 368 B1**
(45) Date of publication and mention of the grant of the patent: **19.11.2025**
(21) Application number: 20903246.5
(22) Date of filing: 16.12.2020
(51) Int. Cl.: G06F 21/55, H04L 9/40, G06F 11/30, G06F 11/32, G06F 11/34

(54) **ALARM INFORMATION GENERATION METHOD AND APPARATUS, ELECTRONIC DEVICE, AND STORAGE MEDIUM**
ALARMINFORMATIONSERZEUGUNGSVERFAHREN UND -VORRICHTUNG, ELEKTRONISCHE VORRICHTUNG UND SPEICHERMEDIUM
PROCÉDÉ ET APPAREIL DE GÉNÉRATION D'INFORMATIONS D'ALARME, DISPOSITIF ÉLECTRONIQUE, ET SUPPORT DE STOCKAGE

(30) Priority: 17.12.2019 CN 201911304633
(43) Date of publication of application: 26.10.2022
(73) Proprietor: Sangfor Technologies Inc., Shenzhen, Guangdong 518055 (CN)
(72) Inventor: MA, Changchun, Shenzhen, Guangdong 518055 (CN)
(74) Representative: Müller Schupfner & Partner Patent- und Rechtsanwaltspartnerschaft mbB (Muc)
(86) International application number: PCT/CN2020/136704
(87) International publication number: WO 2021/121244

(56) References cited:
- CN-A- 110 189 167
- CN-A- 110 223 106
- CN-A- 110 322 153
- US-A1- 2018 367 548
- US-A1- 2019 147 354
- US-A1- 2019 342 307
- US-B1- 9 225 730

## Description

The present disclosure claims priority to Chinese Patent Application No. 201911304633.0, titled "ALARM INFORMATION GENERATION METHOD AND APPARATUS, ELECTRONIC DEVICE, AND STORAGE MEDIUM", filed on December 17, 2019 with the China National Intellectual Property Administration.

### FIELD

The present disclosure relates to the technical field of data processing, and in particular to a method and an apparatus for generating alarm information, an electronic device and a storage medium.

### BACKGROUND

There are a large number of behavior events during the use of a terminal. Among these behavior events, some behavior events meet expectations of users, and some behavior events are malicious events beyond the expectations of the users. The occurrence of malicious events may cause harm to the terminal in different degrees, and even destroy the applicability of the terminal. Therefore, it is required to remind the users to take protective measures for the terminal when there is a malicious event in the terminal.

The current method for reminding is implemented as follows: in response to observing an occurrence of a predetermined behavior event, an indicator model records relevant behavior events and generates an alarm log, and the users are reminded to take protective measures for the terminal through the alarm log. However, the alarm log generated by the indicator model has the drawbacks of huge amount of data and high false alarm rate of malicious events. US9225730B1 discloses that: Event data is collected from host devices, the event data describing events in which devices, processes, or services are accessed in the environment. The event data is arranged into a graph that includes vertices corresponding to devices, processes, or services, and edges that connect pairs of vertices. Each edge may identify an event by connecting two vertices corresponding to two devices, processes, or services included in the event. A rarity metric is determined for each edge, indicating a rarity of events of a particular type connecting two vertices. A risk metric may also be determined for each edge, indicating a security risk associated with the event type or the target of the event. The graph may be traversed according to the risk and rarity metrics, to identify patterns of anomalous activity in the event data. US20180367548A1 discloses that system and security events may be used to generate a network connection graph and detect remote file executions and/or other detections, for use in tracking malicious lateral movement across a computer network, such as a compromised computer network. Lateral movement determination across a computer network may be divided into two subproblems: forensic analysis and general detection. With forensic analysis, given a malicious node, possible lateral movement leading into or out of the node is identified. General detection identifies previously unknown malicious lateral movement on a network using a remote file execution detector, and/or other detectors, and a rare path anomaly detection algorithm. US20190342307A1 discloses a cybersecurity platform that processes collected data using a data model to identify and link anomalies and in order to identify generate security events and intrusions. The platform generates graph data structures using the security anomalies extended using additional data. The graph data structures represent links between nodes, the links being events, the nodes being machines and user accounts. The platform processes the graph data structures by combining similar nodes or grouping security events with common features to behaviour indicative of a single or multiple security events to identify chains of events which together represent an attack.

### SUMMARY

The purpose of the present disclosure is to provide a method and an apparatus for generating alarm information, an electronic device and a storage medium, in which the alarm information is generated through an event heterogeneous graph, thereby improving the accuracy and reliability of the generated alarm information, and avoiding missing real malicious events due to excessive number of log information in an alarm log.

The invention is set out in the appended set of claims.

It can be seen that according to the method, the event heterogeneous graph is constructed by using the extracted behavior data in the terminal, the abnormal value of the corresponding behavior event is determined by using the event heterogeneous graph, and the final alarm information may be determined based on the abnormal value. That is, according to the method, the abnormal value of the behavior event may be determined through the event heterogeneous graph, the possibility that the corresponding behavior event is a malicious event may be determined through the abnormal value, and finally the behavior event to be alarmed may be selected based on the abnormal value to generate the alarm information. Furthermore, according to the method, the accuracy and reliability of the generated alarm information are improved through the abnormal value. Since the accuracy of the alarm information can be directly improved through the abnormal value, the huge amount of data in the alarm log and the high false alarm rate of malicious events in the related art, which are caused by increasing the amount of data in the alarm log to ensure detection of malicious events, may be avoided. In addition, the concealment of real malicious events to be alarmed due to the excessive number of behavior events in the alarm log may be avoided. It can be seen that, the reliability and accuracy of the alarm log can be improved and the data amount of the alarm log can be reduced, as compared with the related art.

Correspondingly, an apparatus for generating alarm information, an electronic device and a storage medium, which have the above advantageous effects, are provided according to the present disclosure, which will not be repeated here.

### BRIEF DESCRIPTION OF THE DRAWINGS

In order to clearly describe the technical solutions in the embodiments of the present disclosure or the technical solutions in the conventional technology, drawings to be used in the description of the embodiments or the conventional technology are briefly described hereinafter. It is apparent that the drawings described below are merely some embodiments of the present disclosure, and other drawings can be obtained by those skilled in the art according to the provided drawings without any creative effort.
Figure 1 is a flowchart of a method for generating alarm information according to an embodiment of the present disclosure;
Figure 2 is a flowchart of constructing an event heterogeneous graph according to an embodiment of the present disclosure;
Figure 3 is a flow chart of determining an abnormal value of a specified behavior event according to an embodiment of the present disclosure;
Figure 4 is a block diagram illustrating the structure of an apparatus for generating alarm information according to an embodiment of the present disclosure;
Figure 5 is a block diagram illustrating the structure of an electronic device according to an embodiment of the present disclosure; and
Figure 6 is a schematic diagram illustrating a specific structure of an electronic device according to an embodiment of the present disclosure.

### DETAILED DESCRIPTION OF THE EMBODIMENTS

In order to more clearly describe the objects, technical solutions and advantages of the present disclosure, the present disclosure is described below in conjunction with the drawings and the embodiments. It should be understood that the described embodiments herein are intended to explain the present disclosure rather than to limit the present disclosure. All the other embodiments obtained by those skilled in the art based on the embodiments in the present disclosure without any creative effort fall into the scope of the present disclosure.

At present, due to the defects of protective measures and the weak security awareness of users, malicious events occur from time to time. Malicious events refer to behavior events executed by hackers illegally invading a terminal, which are beyond expectations of users. The occurrence of malicious events will cause harm to the terminal in different degrees, such as: data breaches (breaches of key data, business secrets, employee information, customer information, and the like), which will cause incalculable losses to users; encrypting of terminal data (such as ransomware), that is, the terminal becomes unusable because the hackers encrypt the data in the terminal and destroy the usability of the terminal. Hackers usually use asymmetric encryption, which is difficult to decrypt without a private key. In order to restore the usability of the terminal, the users have to pay a large amount of ransom to the hackers. In addition, the hackers can also control the terminal (also known as a puppet machine, which can refer to a machine remotely controlled by hackers) through account blasting, exploiting loopholes, or the like, to participate in other network attacks such as Distributed denial of service attack (DDOS). Therefore, it is required to remind the users to take protective measures for the terminal when there is a malicious event in the terminal.

Conventionally, a method for generating an alarm log related to the malicious event is as follows: in response to observing an occurrence of a predetermined behavior event, an indicator model records relevant behavior events and generates an alarm log. The predetermined behavior event is a user-defined behavior event that may be a malicious event. In general, a user-defined predefined behavior event has a relatively broad scope, so as to reduce the missed detection of malicious events. It can be seen that since a relatively large number of behavior events that are not the malicious event are defined as the predetermined behavior events, the alarm log generated by the method has a huge amount of data, and the log data corresponding to the real malicious events in the alarm log accounts for a small proportion. There is a problem of high false alarm rate, which also causes concealment of the log data corresponding to real malicious events in the large number of log data corresponding to normal behaviors. Furthermore, at present, after the alarm log is acquired, a lot of manpower and resources are needed to maintain the alarm log. For example, users are required to build a powerful Security Operations Center (abbreviated as SOC) or the like to maintain the alarm log.

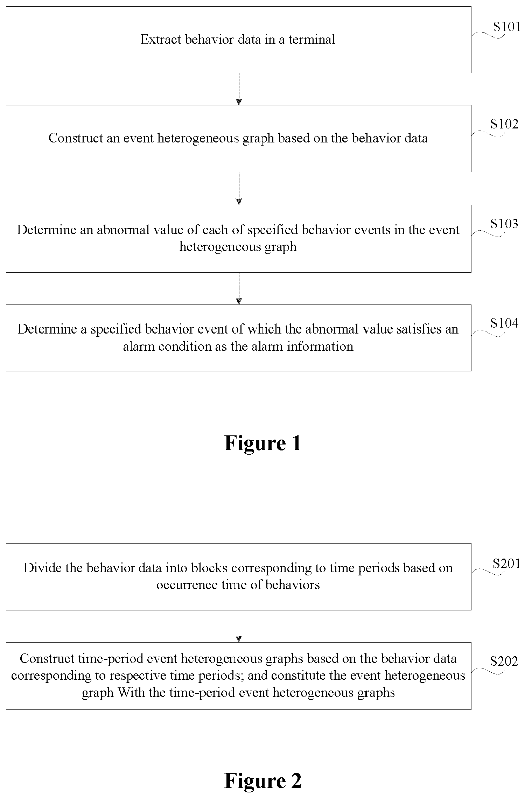

The accuracy of the alarm log is improved by using an event heterogeneous graph according to an embodiment of the present disclosure, thereby solving the above problems. Reference is made to Figure 1 for details. Figure 1 is a flowchart of a method for generating alarm information according to an embodiment of the present disclosure. The method may include S101 to S104.

In S101, behavior data in a terminal is extracted.

In the embodiment of the present disclosure, behavior data occurring in the terminal is audited, so as to determine whether there is a malicious event in the terminal. Therefore, in the embodiment of the present disclosure, it is to firstly extract the behavior data in the terminal when generating the alarm information. It should be noted that, in the embodiment of the present disclosure, a source of the behavior data is not limited. For example, Application Programming Interface (API) calling sequences may be used as the behavior data; related data in a third-party log may also be used as the behavior data; certainly, both the API calling sequences and the related data in the third-party log may be used as the behavior data to be extracted.

It can be understood that, in the embodiment of the present disclosure, the extracted behavior data is analyzed, and then the behavior events that are to be used as the alarm information are determined from the behavior data. Therefore, the more comprehensive the extracted behavior data is, the more accurate the obtained alarm information is, and the missed detection of malicious events can also be avoided. That is, in order to further improve the accuracy and reliability of the generated alarm information, the related data in both the API calling sequence and the third-party log may be used as the behavior data to be extracted in the embodiment of the present disclosure. Correspondingly, the process of extracting behavior data in the terminal may include: extracting the behavior data in the terminal from a third-party log and an API log. Certainly, the manner for acquiring the third-party log and API log corresponding to the terminal is not limited herein, as long as the third-party log and API log corresponding to the terminal can be obtained.

The behavior data mentioned in the embodiment of the present disclosure may refer to underlying behavior actions, such as reading and writing of a file, creation of a process, and execution of a process, performed in the operation of the terminal. The specific content of the behavior data is not limited in the embodiments of the disclosure.

It should be noted that the terminal is not limited is not limited in the embodiments of the disclosure. The terminal may be a device for inputting user information and outputting processing results. For example, the terminal may be a personal computer, a laptop computer, a mobile phone, a server, or the like.

In S102, an event heterogeneous graph is constructed based on the behavior data, where edges in the event heterogeneous graph represent behavior events.

According to the embodiment of the present disclosure, by constructing the event heterogeneous graph corresponding to the behavior data, an abnormal value of a specified behavior event in the event heterogeneous graph may be quickly determined. That is, in the embodiment of the present disclosure, all the extracted behavior data is converted into the event heterogeneous graph for display, so as to calculate the abnormal values of the specified behavior events of each event in the event heterogeneous graph, and then generate alarm information based on the abnormal values. Since multiple data sources may be combined in the event heterogeneous graph and relationship between various behavior events can be intuitively exhibited, the reliability and accuracy of the obtained abnormal values can be improved.

It can be understood that the event heterogeneous graph is a heterogeneous graph (HG), where graph is a term used in graph theory. For example, a graph G can refer to a triple (V, E, I), where V is a set of vertices, E is a set of edges, E and V disjoint with each other; I is referred to as an incidence function to map every element in E to pair of vertices. If an edge e is mapped to (u, v), then it is defined that the edge e joins vertices u and v, u and v are referred to as endpoints of the edge e, and in this case u and v are adjacent with reference to the edge e. In addition, if two edges i, j share a common vertex u, then it is defined that the edges i, j are adjacent with reference to u. Heterogeneous graph is a term used in graph theory. In general, vertices in a graph are of the same type, and edges in the graph are of the same type. However, in real life, there are generally connections between different types. Therefore, on the basis of the graph, auxiliary information is added to each vertex to support different types of vertices, whereby a heterogeneous graph is formed. Common auxiliary information may include: labels (used to mark category information), attributes (used to mark specific attribute information), vertex characteristic (used to mark vertex-specific attributes), information propagation (used to mark information propagation paths), knowledge libraries (used to mark extra knowledge about vertices) or the like. In this embodiment of the present disclosure, the event heterogeneous graph may be a directed graph (digraph) or an undirected graph, both of which are terms used in graph theory. If a graph includes edges with directionality, that is, two vertices of an edge are identified differently as a source vertex and a destination vertex, the graph may be referred to as a directed graph. If a graph includes edges with no directionality, which means two vertices of an edge are not identified differently as the source vertex and the destination vertex, the graph may be referred to as an undirected graph. Certainly, in the embodiment of the present disclosure, the constructed event heterogeneous graph is not limited to a directed graph or an undirected graph, which may be determined according to the actual situation of the behavior data. For example, if the behavior event corresponding to the behavior data has directionality, the constructed event heterogeneous graph is a directed graph.

It should be noted that in the embodiment of the present disclosure the manner for constructing the event heterogeneous graph based on the behavior data is not limited. For example, it may be implemented as follows: each piece of behavior data is traversed to be converted into a form of two vertices and an edge; if the current vertex is already in the set of vertices, the edge is added into the set of edges; and if the current vertex is not in the set of vertices, a new vertex is added into the set of vertices and the edge is added into the set of edges. The edges in the event heterogeneous graph represent behavior events, and each behavior data element corresponds to one behavior event.

In S103, an abnormal value of each of the specified behavior events in the event heterogeneous graph is determined.

It should be noted that, in the embodiment of the present disclosure, the abnormal value represents the possibility that the behavior event in the event heterogeneous graph is the malicious event. That is, the abnormal value indicates the possibility that the corresponding behavior event is a malicious event. It can be seen that according to the embodiment of the present disclosure, the possibility that a specified behavior event is a malicious event may be directly determined based on the abnormal value corresponding to the specified behavior event in the event heterogeneous graph; and then the specified behavior event, which corresponds to an abnormal value satisfying an alarm condition, is determined as alarm information. Certainly, in the embodiment of the present disclosure, the number of specified behavior events is not limited. For example, the specified behavior events may be part of the behavior events in the event heterogeneous graph, for example, the specified behavior event may be any one behavior event in the event heterogeneous graph, or the specified behavior events may be any number of behavior events in the event heterogeneous graph. Certainly, the specified behavior events may be all of the behavior events in the event heterogeneous graph. The users can set the specified behavior events according to actual needs.

It can be seen that, in the embodiment of the present disclosure, the accuracy of the alarm information is improved through abnormal values, therefore the huge amount of data in the alarm log and the high false alarm rate of malicious events in the related art, which are caused by increasing the amount of data in the alarm log (that is, setting for the indicator model the predetermined behavior events in a wide range and loose conditions) to ensure detection of malicious events, may be avoided. Therefore, in the embodiment of the present disclosure, the reliability and accuracy of the alarm information can be improved and the data volume of the alarm information is reduced as compared with the related art. In other words, in the embodiment of the present disclosure, by virtue of the abnormal values, the generated alarm information is in a controllable data volume, has high accuracy and traceability (the behavior events related to the specified behavior events and the relationship therebetween can be acquired through the event heterogeneous graph).

It should be noted that, in the embodiment of the present disclosure, the manner for determining the specified behavior event is not limited, and the manner for determining the specified behavior event may be set by the user according to the actual application scenario. For example, in the application scenario where the user needs to acquire the alarm information corresponding to the terminal, in order to ensure the accuracy and comprehensiveness of the acquired alarm information and avoid missed detection of malicious events, all behavior events in the event heterogeneous graph may be used as specified behavior events. In the application scenario where the user needs to analyze the alarm information currently obtained by the alarm system to determine whether false alarms exist in the alarm information currently obtained by the alarm system and to simplify the alarm information currently obtained by the alarm system, so as to optimize the efficiency of the SOC, that is, in the need to judge whether the behavior events in the alarm information currently obtained by the alarm system include normal behavior events, the amount of the alarm information can be reduced by removing the alarm information corresponding to the normal behavior events from the alarm information currently obtained by the alarm system, thereby reducing the load of SOC and improving the efficiency of the SOC. For effective removal, all the behavior events corresponding to the input initial alarm information may be regarded as the specified behavior events. In the embodiment of the present disclosure, the initial alarm information is not limited. The initial alarm information may be acquired alarm information whose accuracy is undetermined. For example, the initial alarm information may be the alarm information currently obtained by the alarm system.

In the embodiment of the present disclosure, the manner for determining the abnormal value of the specified behavior event in the event heterogeneous graph is not limited. For example, whether a specified behavior event is a malicious event may be determined through the probability of occurrence of the specified behavior event in the event heterogeneous graph. Alternatively, the probability of occurrence of the specified behavior event may be acquired based on the event heterogeneous graph; then the abnormal value of the specified behavior event is determined based on the probability; and finally it is determined whether the specified behavior event is a malicious event based on the obtained abnormal value. Certainly, in the embodiment of the present disclosure, the manner for acquiring the probability of occurrence of the specified behavior event based on the event heterogeneous graph is not limited. For example, the probability that the specified behavior event occurs in the event heterogeneous graph may be calculated by dividing the number of occurrences of the specified behavior event in the event heterogeneous graph by the total number of behavior events in the event heterogeneous graph. The corresponding probability is calculated in this way for each specified behavior event. The probability that the specified behavior event occurs may also be calculated by dividing the number of occurrences of the specified behavior event in the event heterogeneous graph by the number of occurrences of a similar behavior event corresponding to the specified behavior event in the event heterogeneous graph. The corresponding probability is calculated in this way for each specified behavior event; where, the source vertex of the similar behavior event has the same label as the source vertex of the specified behavior event, and the destination vertex of the similar behavior event has the same label as the destination vertex of the specified behavior event. The probability that the specified behavior event occurs may also be calculated based on the number of occurrences and activity of the specified behavior event in the event heterogeneous graph, and the number of occurrences of the similar behavior event corresponding to the specified behavior event in the event heterogeneous graph. The corresponding probability is calculated in this way for each specified behavior event. Certainly, in the embodiment of the present disclosure, the manner for acquiring the activity of the specified behavior event in the event heterogeneous graph is not limited. For example, the activity may be determined based on the out-degree of the source vertex of the specified behavior event and the in-degree of the destination vertex of the specified behavior event. Out Degree (OD) of a vertex refers to the number of edges which take the vertex as the source vertex in a directed graph. In Degree (ID) of a vertex refers to the number of edges which takes the vertex as the destination vertex in a directed graph.

Certainly, in the embodiment of the present disclosure, the manner for determining the abnormal value of the specified behavior event based on the probability is not limited. For example, the abnormal value of the specified behavior event may be determined based on the negative correlation between the probability the abnormal value, and the corresponding abnormal value is calculated in this way for each specified behavior event. It should be noted that in the embodiment of the present disclosure, the negative correlation between the probability and the abnormal value is not limited. The negative correlation may be set and modified by the user according to the actual situation.

In S104, the specified behavior event of which the abnormal value satisfies an alarm condition is determined as the alarm information.

In the embodiment of the present disclosure, the alarm condition is not limited and the alarm condition may be set by the user according to the actual application scenario. For example, the alarm condition may be a set alarm threshold; or the alarm condition may be a required amount of the alarm information, and the like. Certainly, in the embodiment of the present disclosure, the specific value of the alarm threshold and the required amount of the alarm information are not limited, which may be set and modified by the user according to the actual application scenario. Correspondingly, in the embodiment of the present disclosure, the process of determining the specified behavior event of which the abnormal value satisfies the alarm condition as the alarm information is not limited. For example, in a case that the alarm condition is a set alarm threshold, correspondingly, the process of determining the specified behavior event of which the abnormal value satisfies the alarm condition as the alarm information may include: comparing the abnormal value with the alarm threshold; and if the abnormal value is greater than the alarm threshold, determining the specified behavior event corresponding to the abnormal value as alarm information. It can be understood that, in a case that there are multiple specified behavior events, each specified behavior event has one corresponding abnormal value. Therefore, the above process of comparison is performed for each abnormal value. In a case that the alarm condition is to determine specified behavior events corresponding to first preset number of abnormal values as the alarm information, correspondingly, the process of determining the specified behavior event of which the abnormal value satisfies the alarm condition as the alarm information may include: sorting abnormal values of the specified behavior events in a descending order, and determining specified behavior events corresponding to first preset number of abnormal values as the alarm information. For example, the abnormal values obtained in step S103 are sorted in a descending order, and the first N1 specified behavior events are correspondingly determined as the alarm information. Certainly, in the embodiment of the present disclosure, the specific value of the preset number, i.e., the value of N1, is not limited.

It should be noted that in the embodiment of the present disclosure, the specific form of the alarm information is not limited, and the specific form may be set and modified by the user according to actual needs. For example, the alarm information may be in the form of a log, that is, an alarm log. Alternatively, the alarm information may be in the form of a table.

Further, in order to enable the user to acquire the alarm information in time, the alarm information may be output to the user. Certainly, in the embodiment of the present disclosure, the specific manner for outputting the alarm information is not limited. For example, the alarm information may be output through an IM system; the alarm information may be output through a mail system; the alarm information may be output through a short message system; or the alarm information may be output through a log system. Certainly, potential threat information may be communicated to the user by combination of at least two of the above methods.

Based on the above technical solution, a concise and efficient method for generating alarm information is provided according to the embodiment of the present disclosure. In the embodiment, the event heterogeneous graph is constructed by using the extracted behavior data in the terminal, and the abnormal value of the corresponding behavior event is determined by using the event heterogeneous graph, and the final alarm information may be determined based on the abnormal value. That is, the abnormal value of the behavior event may be determined through the event heterogeneous graph, the possibility that the corresponding behavior event is a malicious event may be clarified through the abnormal value, and finally the behavior event that requires to be alarmed is selected based on the abnormal value to generate the alarm information. It can be seen that in the present embodiment, the accuracy and reliability of the generated alarm information are improved through the abnormal value; and in the present embodiment, the accuracy of the alarm information may be improved through the abnormal values, therefore the huge amount of data in the alarm log and the high false alarm rate of malicious events in the related art, which are caused by increasing the amount of data in the alarm log to ensure detection of malicious events, may be avoided. In addition, the concealment of real malicious events to be alarmed due to the excessive number of behavior events in the alarm log may be avoided. It can be seen that, the reliability and accuracy of the alarm log can be improved and the data amount of the alarm log can be reduced according to the present embodiment, as compared with the related art.

Based on the above embodiment, the abnormal value of the behavior event, which can clarify the possibility that the corresponding behavior event is a malicious event, may be determined through the event heterogeneous graph, and the alarm information is generated based on the abnormal value. Therefore, the accuracy of the constructed event heterogeneous graph is the basis for obtaining accurate abnormal value later, and the efficiency for constructing the event heterogeneous graph also directly affects the efficiency for generating the alarm information. In order to improve the accuracy and construction efficiency of the event heterogeneous graph, reference is made to Figure 2, which is a flowchart of constructing an event heterogeneous graph according to an embodiment of the present disclosure. The method may include S201 to S202.

In S201, the behavior data is divided into blocks corresponding to time periods based on occurrence time of behaviors.

In the embodiment of the present disclosure, the number of time periods is not limited, and the number of time periods is related to the time range corresponding to the extracted behavior data of the terminal and the length of each time period. For example, in a case that the time range corresponding to the extracted behavior data of the terminal is one day, and the length of each time period is one hour, the number of obtained time periods is 24. Certainly, in the embodiment of the present disclosure, the time range corresponding to the extracted behavior data of the terminal, and the length of each time period, are not limited. The time range and the length of time period may be set and modified by the user according to the actual application scenario.

It should be noted that, in the embodiment of the present disclosure, the time periods may have same or different lengths. When the time periods are of the same length, the method for acquiring the time periods may be as follows: the time range corresponding to the extracted behavior data of the terminal is divided into several time periods according to the preset length of time period. For example, the extracted behavior data of the terminal is divided into blocks corresponding to time periods by using an observation window corresponding to the preset length of time period. Certainly, in the embodiment of the present disclosure, the value of the preset length of time period is not limited. In a case that the time periods have different lengths, the method for acquiring the time periods may be as follows: the time range corresponding to the extracted behavior data of the terminal is divided into several time periods based on preset lengths of time periods in sequence. In the embodiment of the present disclosure, the manner for setting the preset lengths of time periods is not limited. For example, the time range corresponding to the extracted behavior data of the terminal may be firstly divided into an idle time range and a busy time range, then the idle time range is divided into several time periods with a first preset length, and the busy time range is divided into several time periods with a second preset length; where the first preset length is greater than the second preset length. Certainly, in the embodiment of the present disclosure, the values of the first preset length and the second preset length are not limited.

In S202, time-period event heterogeneous graphs are constructed based on the behavior data corresponding to respective time periods; and the event heterogeneous graph is constituted by the time-period event heterogeneous graphs.

In the embodiment of the present disclosure, for all the extracted behavior data, a time period to which each piece of the behavior data belongs is determined based on the time at which the behavior occurs, and all the extracted behavior data is mapped into corresponding time periods. That is, all the extracted behavior data is divided into blocks based on set time periods; the behavior events corresponding to the behavior data extracted in each time period are put together to generate the time-period event heterogeneous graph corresponding to each time period; and the event heterogeneous graph may be constituted by the obtained time-period event heterogeneous graphs. That is, the event heterogeneous graph obtained in the embodiment of the present disclosure includes the time-period event heterogeneous graphs corresponding to respective time periods. Certainly, in the embodiment of the present disclosure, the manner for constructing time-period event heterogeneous graphs corresponding to respective time periods based on the behavior data corresponding to the time periods is not limited. For example, each piece of behavior data may be traversed and converted into a form of two vertices and an edge; if the current vertex is already in the set of vertices, the edge is added into the set of edges; and if the current vertex is not in the set of vertices, a new vertex are added into the set of vertices and the edge is added into the set of edges. It can be understood that, in the embodiment of the present disclosure, the process of constructing an event heterogeneous graph for all the extracted behavior data is avoided by dividing the extracted behavior data into partial behavior data corresponding to multiple time periods. That is, the efficiency of constructing each time-period event heterogeneous graph is improved by the division of the overall behavior data, thereby improving the construction efficiency of the final event heterogeneous graph.

Further, the time periods are in chronologic order, and a causal relationship may exist between multiple behavior events that occur in succession, therefore, behavior events in the time periods may be correlated. In order to improve the accuracy of the constructed time-period event heterogeneous graph, in the embodiment of the present disclosure, the time-period event heterogeneous graphs corresponding to respective time periods may be sequentially generated according to the chronologic order of the time periods. In addition, in the process of constructing the time-period event heterogeneous graph corresponding to the current time period based on the behavior data corresponding to the current time period, contents corresponding to behavior data that are in the previous time periods and are correlated to the current time period, is added. In an example, behavior events corresponding to a first time period include behavior data indicating creating a first file, and behavior events corresponding to a second time period include behavior data indicating writing first data in the created first file. In this case, when constructing the time-period event heterogeneous graph corresponding to the second time period, the content about the creation of the first file in the first time period may be added to the second time period. Certainly, in the embodiment of the present disclosure, the manner for adding content corresponding to the behavior data that is in the previous time period and is correlated to the current time period is not limited. For example, it may be implemented as adding attribute information at a position of the corresponding behavior event in the time-period event heterogeneous graph corresponding to the current time period. Thus, the influence of the behavior events in previous time periods on the behavior events corresponding to the current time period will not be missed in the time-period event heterogeneous graph generated for the current time period.

Further, in order to more clearly represent the causal relationship between multiple behavior events that occurs in succession, in the embodiment of the present disclosure, the time period in which the relevant behavior event occurs may also be marked in the time-period event heterogeneous graph corresponding to the current time period. In an example, behavior events corresponding to a first time period include behavior data indicating creating a first file, and behavior events corresponding to a second time period include behavior data indicating writing first data in the created first file. In this case, when constructing the time-period event heterogeneous graph corresponding to the second time period, the content of the creation of the first file in the first time period may be added into the time-period event heterogeneous graph corresponding to the second time period, and it is marked that the creation of the first file occurs in the first time period.

Based on the above technical solutions, a method for generating alarm information is provided according to an embodiment of the present disclosure. In the embodiment, the event heterogeneous graph is formed by constructing the time-period event heterogeneous graphs. By dividing all the extracted behavior data into partial behavior data blocks corresponding to multiple time periods, the process of constructing an event heterogeneous graph for all the extracted behavior data is avoided. That is, the efficiency of constructing each time-period event heterogeneous graph is improved by the division of the overall behavior data. In addition, the accuracy of the constructed event heterogeneous graph is improved by adding, in each time-period event heterogeneous graph, the causal relationship between behavior data corresponding to different time periods. Furthermore, the accuracy and construction efficiency of the event heterogeneous graph can be improved by the method for constructing the event heterogeneous graph according to the embodiment of the present disclosure.

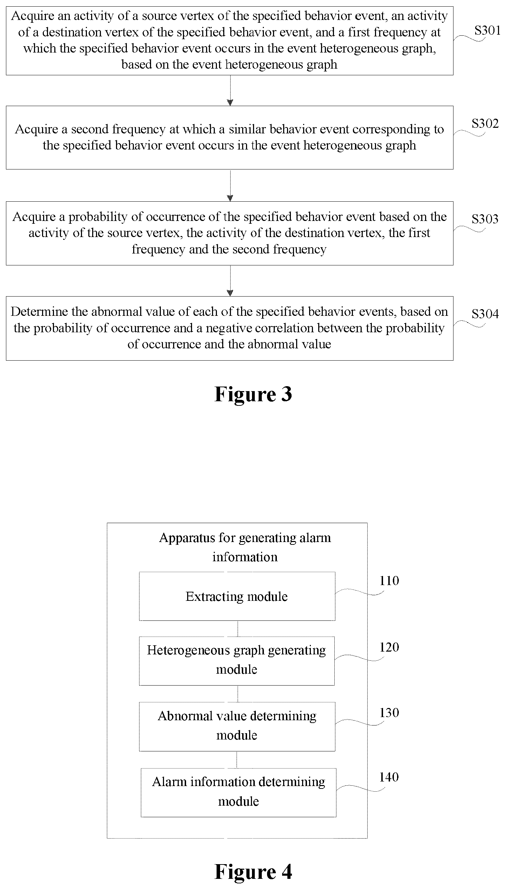

Based on any of the above embodiments, reference is made to Figure 3, which is a flowchart of determining an abnormal value of a specified behavior event according to an embodiment of the present disclosure. In the embodiment of the present disclosure, the accuracy of the abnormal value of the specified behavior event can be further improved. The process can include S301 to S304.

In S301, an activity of a source vertex of the specified behavior event, an activity of a destination vertex of the specified behavior event, and a first frequency at which the specified behavior event occurs in the event heterogeneous graph are acquired based on the event heterogeneous graph.

It should be noted that the event heterogeneous graph constructed in the embodiment of the present disclosure is a directed graph. Vertices in the event heterogeneous graph are constructed by using source vertices (subject) and destination vertices (object), edges in the event heterogeneous graph are constructed using behavior events (action), and the constructed edges are directed edges which point to the destination vertex (object) from the source vertex (subject).

In the embodiment of the present disclosure, the manner for acquiring the activity of the source vertex and the activity of the destination vertex of the specified behavior event is not limited. For example, the activity of the source vertex of the specified behavior event may be determined based on the out-degree of the source vertex, and the activity of the destination vertex of the specified behavior event may be determined based on the in-degree of the destination vertex. In the embodiment of the present disclosure, the manner for determining the activity of the source vertex of the specified behavior event based on the out degree of the source vertex is not limited. For example, in the embodiment of the present disclosure, determining the activity based on the out-degree of the source vertex of the specified behavior event may be implemented as follows: in the time-period event heterogeneous graphs corresponding to all of the time periods, the number of time periods in which the out-degree of the source vertex of the specified behavior event is greater than 0 is determined, and the ratio of the number of time periods in which the out-degree of the source vertex of the specified behavior event is greater than 0 to the total number of time periods is determined as the activity of the source vertex of the specified behavior event, which may be denoted as act_out. The activity of the source vertex of each specified behavior event may be determined according to the above process. In the embodiment of the present disclosure, the manner for determining the activity of the destination vertex of the specified behavior event based on the in-degree of the destination vertex is not limited. For example, in this embodiment of the present disclosure, determining the activity based on the in-degree of the destination vertex of the specified behavior event may be implemented as follows: in the time-period event heterogeneous graphs corresponding to all of the time periods, the number of time periods in which the out-degree of the source vertex of the specified behavior event is greater than 0 is determined, and the ratio of the number of time periods in which the in-degree of the destination vertex of the specified behavior event is greater than 0 to the total number of time periods is determined as the activity of the destination vertex of the specified behavior event, which may be denoted as act_in. The activity of the destination vertex of each specified behavior event may be determined according to the above process. Certainly, the embodiment of the present disclosure is not limited to the numerical value of 0, and other numerical values such as 1 may be used.

In the embodiment of the present disclosure, the process of determining a first frequency at which the specified behavior event occurs in the event heterogeneous graph may be as follows: the number of edges, for which the source vertices are the same, the destination vertices are the same, and the corresponding behavior events are the same, is acquired from the constructed event heterogeneous graph, as the first frequency. For example, in the time-period event heterogeneous graphs corresponding to all time periods, the number of edges, for which the source vertices are the same, the destination vertices are the same, and the corresponding behavior events are the same, is acquired as the first frequency, which may be denoted as freq. The first frequency of each specified behavior event may be acquired according to the above process.

In S302, a second frequency at which a similar behavior event corresponding to the specified behavior event occurs in the event heterogeneous graph is acquired, where the source vertex of the similar behavior event has the same label as the source vertex of the specified behavior event, and the destination vertex of the similar behavior event has the same label as the destination vertex of the specified behavior event.

The purpose of step S302 in the embodiment of the present disclosure is to acquire the second frequency at which the similar behavior event occurs in the event heterogeneous graph. The similar behavior event and corresponding specified behavior event have source vertices with the same label, destination vertices with the same label, and edges with the same label. Therefore, the process of acquiring the second frequency at which the similar behavior event corresponding to the specified behavior event occurs in the event heterogeneous graph may be implemented as follows: the number of similar behavior events, which have source vertices, destination vertices and edges each with the same label as those of the specified behavior event, is acquired from the constructed event heterogeneous graph, as the second frequency. For example, in a time-period event heterogeneous graph corresponding to all time periods, the number of similar behavior events, which have source vertices, destination vertices and edges each with the same label as those of the specified behavior event, is acquired as the second frequency, which may be denoted as freq_sim. The second frequency of the similar behavior event corresponding to each specified behavior event may be acquired according to the above process.

In S303, a probability of occurrence of the specified behavior event is acquired based on the activity of the source vertex, the activity of the destination vertex, the first frequency and the second frequency.

In this embodiment of the present disclosure, the method for acquiring the probability of occurrence of the specified behavior event may be implemented as: act_out*act_in*(freq/freq_sim). The probability of occurrence of each specified behavior event may be calculated according to the above process.

In S304, the abnormal value of the specified behavior event is determined, based on the probability of occurrence and a negative correlation between the probability of occurrence and the abnormal value.

It should be noted that in the embodiment of the present disclosure, the negative correlation between the probability of occurrence and the abnormal value is not limited, and the negative correlation may be set and modified by the user according to the actual situation, as long as the probability of occurrence and the abnormal value is negatively correlated. For example, the abnormal value of the specified behavior event may be determined from 1-act_out*act_in*(freq/freq_sim), that is, the abnormal value of the specified behavior event is obtained by subtracting the probability of occurrence acquired in step S303 from 1. The abnormal value of each specified behavior event may be calculated according to the above process. Certainly, any other function of negative correlation between input parameters and output parameters may be alternatively used, where the probability of occurrence of the specified behavior event is input into the function as an input parameter, and the obtained output parameter is used as the abnormal value of the specified behavior event. The abnormal value of each specified behavior event may be calculated according to the above process.

A method for generating alarm information is provided according to the embodiment of the present disclosure. In the embodiment of the present disclosure, the abnormal value of the behavior event may be determined through the event heterogeneous graph, and the possibility that the corresponding behavior event is a malicious event may be clarified through the abnormal value, and finally the behavior event to be alarmed is selected based on the abnormal value to generate the alarm information. That is, in the embodiment of the present disclosure, the audited behavior data is embedded into the event heterogeneous graph, malicious event is identified through the event heterogeneous graph, and the alarm information is generated. It can be seen that in the present embodiment, the accuracy and reliability of the generated alarm information are improved through the abnormal value; and the use of the above method for determining the abnormal value can further improve the accuracy of the abnormal value of the specified behavior event.

It should be noted that, non-contradictory features in the embodiments of the present disclosure may be combined arbitrarily to form a new embodiment, which is not limited to the above embodiments. In the embodiment of the present disclosure, the entity to execute the above embodiments is not limited, which may be an electronic device. Certainly, the electronic device may be the terminal itself.

An apparatus for generating alarm information, an electronic device, and a storage medium according to the embodiments of the present disclosure is described hereinafter. The apparatus for generating alarm information, the electronic device, and the storage medium described hereinafter and the method for generating alarm information described above may be referred to each other correspondingly.

Reference is made to Figure 4, which is a block diagram illustrating the structure of an apparatus for generating alarm information according to an embodiment of the present disclosure. The apparatus may include:
an extracting module 110, configured to extract behavior data in a terminal;
a heterogeneous graph generating module 120, configured to construct an event heterogeneous graph based on the behavior data, where edges in the event heterogeneous graph represent behavior events;
an abnormal value determining module 130, configured to determine an abnormal value of each of specified behavior events in the event heterogeneous graph; and
an alarm information determining module 140, configured to determine a specified behavior event of which the abnormal value satisfies an alarm condition as the alarm information.

Based on the above embodiments, the heterogeneous graph generating module 120 may include:
a data dividing unit, configured to divide, based on occurrence time of behaviors, the behavior data into blocks corresponding to time periods; and
a heterogeneous graph generating unit, configured to construct time-period event heterogeneous graphs based on the behavior data corresponding to respective time periods; and constitute the event heterogeneous graph by the time-period event heterogeneous graphs.

Based on the above embodiments, the alarm information determining module 140 may include:
an alarm information determining unit, configured to sort abnormal values of the specified behavior events in a descending order, and determine specified behavior events corresponding to first preset number of abnormal values as the alarm information.

Based on the above embodiments, the specified behavior events may be all of behavior events in the event heterogeneous graph; or, the specified behavior events may be all of behavior events corresponding to acquired initial alarm information.

Based on the above embodiments, the abnormal value determining module 130 may include:
a probability acquiring unit, configured to acquire a probability of occurrence of each of the specified behavior events based on the event heterogeneous graph; and
an abnormal value determining unit, configured to determine an abnormal value of each of the specified behavior events based on the probability of occurrence.

Based on the above embodiments, the probability acquiring unit may include:
a first computing sub-unit, configured to acquire, for each of the specified behavior events, an activity of a source vertex of the specified behavior event, an activity of a destination vertex of the specified behavior events, and a first frequency at which the specified behavior event occurs in the event heterogeneous graph, based on the event heterogeneous graph;
a second computing sub-unit, configured to acquire a second frequency at which a similar behavior event corresponding to the specified behavior event occurs in the event heterogeneous graph, where the source vertex of the similar behavior event has the same label as the source vertex of the specified behavior event, and the destination vertex of the similar behavior event has the same label as the destination vertex of the specified behavior event; and
a probability acquiring sub-unit, configured to acquire a probability of occurrence of the specified behavior event based on the activity of the source vertex, the activity of the destination vertex, the first frequency and the second frequency.

Based on the above embodiments, the abnormal value determining unit may include:
an abnormal value determining sub-unit, configured to determine the abnormal value of each of the specified behavior events, based on the probability of occurrence and a negative correlation between the probability of occurrence and the abnormal value.

Based on the above embodiments, the extracting module 110 may include:
an extracting unit, configured to extract the behavior data in the terminal from a third-party log and an API log.

It should be noted that, based on any of the foregoing embodiments, the apparatus may be implemented based on a programmable logic device, and the programmable logic device includes an FPGA, a CPLD, a single-chip microcomputer, a processor, and the like. These programmable logic devices may be provided in the electronic device.

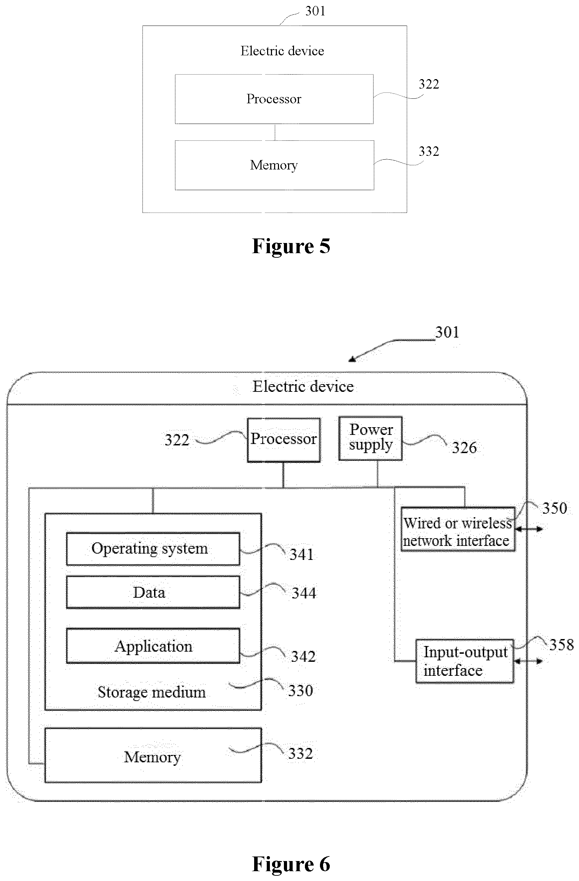

Corresponding to the above method embodiments, an electronic device is further provided according to the embodiments of the present disclosure. As shown in Figure 5, the electronic device may include:
a memory 332 for storing a computer program;
a processor 322, configured to execute the computer program to implement the method for generating alarm information according to above method embodiments.

Specifically, reference is made to Figure 6, which is a schematic diagram illustrating a specific structure of an electronic device according to an embodiment of the present disclosure. The electronic device may vary greatly due to different configurations or performance, and may include one or more processors (central processing units, CPUs) 322 (for example, one or more processors) and a memory 332, and one or more storage media 330 (for example, one or more mass storage devices) that store an application program 342 or data 344. The memory 332 and the storage medium 330 may perform temporary storage or persistent storage. The applications stored in the storage mediums 330 may include one or more above modules (which are not illustrated in Figure 6), each module may include a series of instructions operations on the data processing device. Furthermore, the one or more processers 322 may be configured to communicate with the one or more storage mediums 330, and execute the series of instruction operations in the storage mediums 330 on the electronic device 301.

The electronic device 301 may further include one or more power supplies 326, one or more wired or wireless network interfaces 350, one or more input-output interfaces 358, and/or, one or more operating systems 341, such as Windows ServerTM, Mac OS XTM, UnixTM, LinuxTM, FreeBSDTM.

The steps in the method for generating alarm information described above may be implemented by the structure of the electronic device. The electronic device may be a terminal (e.g., a computer, a server, or the like), which is not limited in the embodiment of the present disclosure.

Corresponding to the above method embodiments, a storage medium is further provided according to the embodiment of the present disclosure. The storage medium have stored thereon computer programs, which when executed by the processor, implement the steps of the method for generating alarm information according to above method embodiments.

The storage medium may be, for example, a USB flash disk, a mobile hard disk, a read-only memory (ROM), a random access memory (RAM), a diskette, an optical disk or any storage medium capable of storing program codes.

The embodiments in the description are described in a progressive manner, and each embodiment places emphasis on the difference from other embodiments. Therefore, one embodiment can refer to other embodiments for the same or similar parts. Since the apparatus disclosed in the embodiment corresponds to the method disclosed in the embodiment, the description for the apparatus is simple, and reference may be made to the method in the embodiment for the relevant parts.

It is further understood by those skilled in the art that units and algorithm steps described in combination with the disclosed embodiments herein may be implemented by electronic hardware, computer software or a combination thereof. In order to clearly describe interchangeability of the hardware and the software, the composition of the examples and the steps are generally described above based on functions. Whether these functions are performed in hardware or software depends on the specific application and design constraints for the technical solution. For each specific application, different methods may be used by those skilled in the art to implement the described function, and such implementation should not be considered as departing from the scope of the application.

The steps of the method or algorithm described according to the embodiments disclosed herein may be implemented in forms of hardware, a software module executed by a processor or the combination thereof. The software module may be stored in a Random Access Memory (RAM), a memory, a Read-Only Memory (ROM), an electrically programmable ROM, an electrically erasable programmable ROM, a register, a hardware disk, a movable magnetic disk, CD-ROM or any other forms of storage medium well known in the art.

A method and an apparatus for generating alarm information, an electric device and a storage medium according to the present disclosure are described above in details. The principle and the embodiments of the present disclosure are illustrated herein by specific examples. The above description of examples is only intended to facilitate the understanding of the method and core idea of the present disclosure. It should be noted that, for those skilled in the art, many modifications and improvements may be made to the present disclosure without departing from the principle of the present disclosure, and these modifications and improvements fall into the protection scope of the present disclosure defined by the claims.

## Claims

1. A method for generating alarm information, comprising:
extracting (S101) behavior data in a terminal;
constructing (S102) an event heterogeneous graph based on the behavior data, wherein edges in the event heterogeneous graph represent behavior events, and vertices in the event heterogeneous graph represent the behavior data associated with the behavior events;
determining (S103) an abnormal value of each of specified behavior events in the event heterogeneous graph; and
determining (S104) a specified behavior event of which the abnormal value satisfies an alarm condition as the alarm information,
wherein constructing an event heterogeneous graph based on the behavior data comprises:
dividing (S201), based on occurrence time of behaviors, the behavior data into blocks corresponding to time periods;
constructing (S202) time-period event heterogeneous graphs based on the behavior data corresponding to respective time periods; and
constituting (S202) the event heterogeneous graph with the time-period event heterogeneous graphs.

2. The method for generating alarm information according to claim 1, wherein determining a specified behavior event of which the abnormal value satisfies an alarm condition as the alarm information, comprises:
sorting abnormal values of the specified behavior events in a descending order, and determining specified behavior events corresponding to top preset number of abnormal values as the alarm information.

3. The method for generating alarm information according to claim 1 or 2, wherein the specified behavior events are all of behavior events in the event heterogeneous graph; or, the specified behavior events are all of behavior events corresponding to acquired initial alarm information.

4. The method for generating alarm information according to any one of claims 1 to 3, wherein determining an abnormal value of each of specified behavior events in the event heterogeneous graph, comprises:
acquiring a probability of occurrence of the specified behavior event based on the event heterogeneous graph; and
determining an abnormal value of the specified behavior event based on the probability of occurrence.

5. The method for generating alarm information according to claim 4, wherein acquiring a probability of occurrence of the specified behavior event based on the event heterogeneous graph, comprises:
acquiring (S301) an activity of a source vertex of the specified behavior event, an activity of a destination vertex of the specified behavior event, and a first frequency at which the specified behavior event occurs in the event heterogeneous graph, based on the event heterogeneous graph;
acquiring (S302) a second frequency at which a similar behavior event corresponding to the specified behavior event occurs in the event heterogeneous graph, wherein the source vertex of the similar behavior event has the same label as the source vertex of the specified behavior event, the destination vertex of the similar behavior event has the same label as the destination vertex of the specified behavior event, and the edge of the similar behavior event has the same label as the edge of the specified behavior event; and
acquiring (S303) the probability of occurrence of the specified behavior event based on the activity of the source vertex, the activity of the destination vertex, the first frequency and the second frequency.

6. The method for generating alarm information according to claim 4, wherein determining an abnormal value of the specified behavior event based on the probability of occurrence, comprises:
determining (S304) the abnormal value of the specified behavior event based on the probability of occurrence and a negative correlation between the probability of occurrence and the abnormal value.

7. The method for generating alarm information according to any one of claims 1 to 6, wherein extracting behavior data in a terminal comprises:
extracting the behavior data in the terminal from a third-party log and an API log.

8. The method for generating alarm information according to any one of claims 5-7, wherein acquiring the probability of occurrence of the specified behavior event based on the activity of the source vertex, the activity of the destination vertex, the first frequency and the second frequency comprises acquiring the probability of occurrence of the specified behavior event according to a formula act_out *act_in*(freq/freq_sim),
wherein
act_out denotes the activity of the source vertex of the specified behavior event;
act_in denotes the activity of the destination vertex of the specified behavior event;
freq denotes the first frequency; and
freq_sim denotes the second frequency.

9. The method for generating alarm information according to any one of claims 1-8, wherein constructing a time-period event heterogeneous graph corresponding to a time period based on the behavior data corresponding to the time period comprises introducing, in the time-period event heterogeneous graph, contents corresponding to behavior data that are in a previous time period and are correlated to the time period.

10. The method for generating alarm information according to any one of claims 1-9, wherein a behavior event related to the specified behavior events and a relationship between the related behavior event and the specified behavior events is acquirable through the event heterogeneous graph.

11. An electronic device (301), comprising:
a memory (332) for storing a computer program; and
a processor (322) configured to execute the computer program to implement the method for generating alarm information according to any one of claims 1 to 10.

12. A storage medium having stored thereon computer-executable instructions that, when loaded and executed by a processor, implement the method for generating alarm information according to any one of claims 1 to 10.

13. A computer program product, wherein the computer program product, when running on a terminal device, causes the terminal device to execute the method according to any one of claims 1 to 10.

## Patentansprüche

1. Verfahren zum Erzeugen von Alarminformationen, umfassend:
Extrahieren (S101) von Verhaltensdaten in einem Endgerät;
Erstellen (S102) eines heterogenen Ereignisgraphen auf Grundlage der Verhaltensdaten, wobei Kanten in dem heterogenen Ereignisgraphen Verhaltensereignisse darstellen und Scheitelpunkte in dem heterogenen Ereignisgraphen die mit den Verhaltensereignissen verbundenen Verhaltensdaten darstellen;
Bestimmen (S103) eines abnormalen Werts jedes von festgelegten Verhaltensereignisse in dem heterogenen Ereignisgraphen; und
Bestimmen (S104) eines festgelegten Verhaltensereignisses, dessen abnormaler Wert eine Alarmbedingung erfüllt, als die Alarminformation,
wobei das Erstellen eines heterogenen Ereignisgraphen auf Grundlage der Verhaltensdaten umfasst:
Aufteilen (S201) der Verhaltensdaten in Blöcke, die Zeitperioden entsprechen, auf Grundlage von Auftrittszeit von Verhalten;
Erstellen (S202) von zeitperiodischen heterogenen Ereignisgraphen auf Grundlage der Verhaltensdaten, die jeweiligen Zeitperioden entsprechen; und
Bilden (S202) des heterogenen Ereignisgraphen mit den zeitperiodischen heterogenen Ereignisgraphen.

2. Verfahren zum Erzeugen von Alarminformationen gemäß Anspruch 1, wobei das Bestimmen eines festgelegten Verhaltensereignisses, dessen abnormaler Wert eine Alarmbedingung erfüllt, als die Alarminformation umfasst:
Sortieren von abnormalen Werten der festgelegten Verhaltensereignisse in absteigender Reihenfolge und Bestimmen festgelegte Verhaltensereignisse, die einer obersten voreingestellten Anzahl abnormaler Werte entsprechen, als die Alarminformation.

3. Verfahren zum Erzeugen von Alarminformationen gemäß Anspruch 1 oder 2, wobei die festgelegten Verhaltensereignisse alle Verhaltensereignisse in dem heterogenen Ereignisgraphen sind; oder die festgelegten Verhaltensereignisse alle Verhaltensereignisse sind, die erfassten anfänglichen Alarminformationen entsprechen.

4. Verfahren zum Erzeugen von Alarminformationen gemäß einem der Ansprüche 1 bis 3, wobei das Bestimmen eines abnormalen Werts für jedes von festgelegten Verhaltensereignissen in dem heterogenen Ereignisgraphen umfasst:
Erfassen einer Auftrittswahrscheinlichkeit des festgelegten Verhaltensereignisses auf Grundlage des heterogenen Ereignisgraphen; und
Bestimmen eines abnormalen Werts des festgelegten Verhaltensereignisses auf Grundlage der Auftrittswahrscheinlichkeit.

5. Verfahren zum Erzeugen von Alarminformationen gemäß Anspruch 4, wobei das Erfassen einer Auftrittswahrscheinlichkeit des festgelegten Verhaltensereignisses auf Grundlage des heterogenen Ereignisgraphen umfasst:
Erfassen (S301) einer Aktivität eines Quellscheitelpunktes des festgelegten Verhaltensereignisses, einer Aktivität eines Zielscheitelpunktes des festgelegten Verhaltensereignisses und einer ersten Frequenz, mit der das festgelegte Verhaltensereignis in dem heterogenen Ereignisgraphen auftritt, auf Grundlage des heterogenen Ereignisgraphen;
Erfassen (S302) einer zweiten Frequenz, mit der ein ähnliches Verhaltensereignis, das dem festgelegten Verhaltensereignis entspricht, in dem heterogenen Ereignisgraphen auftritt, wobei der Quellscheitelpunkt des ähnlichen Verhaltensereignisses die gleiche Bezeichnung wie der Quellscheitelpunkt des festgelegten Verhaltensereignisses hat, der Zielscheitelpunkt des ähnlichen Verhaltensereignisses die gleiche Bezeichnung wie der Zielscheitelpunkt des festgelegten Verhaltensereignisses hat und die Kante des ähnlichen Verhaltensereignisses die gleiche Bezeichnung wie die Kante des festgelegten Verhaltensereignisses hat; und
Erfassen (S303) der Auftrittswahrscheinlichkeit des festgelegten Verhaltensereignisses auf Grundlage der Aktivität des Quellscheitelpunktes, der Aktivität des Zielscheitelpunktes, der ersten Frequenz und der zweiten Frequenz.

6. Verfahren zum Erzeugen von Alarminformationen gemäß Anspruch 4, wobei das Bestimmen eines abnormalen Werts des festgelegten Verhaltensereignisses auf Grundlage der Auftrittswahrscheinlichkeit umfasst:
Bestimmen (S304) des abnormalen Werts des festgelegten Verhaltensereignisses auf Grundlage der Auftrittswahrscheinlichkeit und einer negativen Korrelation zwischen der Auftrittswahrscheinlichkeit und dem abnormalen Wert.

7. Verfahren zum Erzeugen von Alarminformationen gemäß einem der Ansprüche 1 bis 6, wobei das Extrahieren von Verhaltensdaten in einem Endgerät umfasst:
Extrahieren der Verhaltensdaten in dem Endgerät aus einem Protokoll eines Drittanbieters und einem API-Protokoll.

8. Verfahren zum Erzeugen von Alarminformationen gemäß einem der Ansprüche 5 bis 7, wobei das Erfassen der Auftrittswahrscheinlichkeit des festgelegten Verhaltensereignisses auf Grundlage der Aktivität des Quellscheitelpunktes, der Aktivität des Zielscheitelpunktes, der ersten Frequenz und der zweiten Frequenz ein Erfassen der Auftrittswahrscheinlichkeit des festgelegten Verhaltensereignisses gemäß einer Formel act_out*act_in*(freq/freq_sim) umfasst,
wobei
act_out die Aktivität des Quellscheitelpunktes des festgelegten Verhaltensereignisses bezeichnet;
act_in die Aktivität des Zielscheitelpunktes des festgelegten Verhaltensereignisses bezeichnet;
freq die erste Frequenz bezeichnet; und
freq_sim die zweite Frequenz bezeichnet.

9. Verfahren zum Erzeugen von Alarminformationen gemäß einem der Ansprüche 1 bis 8, wobei das Erstellen eines zeitperiodischen heterogenen Ereignisgraphen, der einer Zeitperiode entspricht, auf Grundlage der der Zeitperiode entsprechenden Verhaltensdaten ein Einfügen von Inhalten in den zeitperiodischen heterogenen Ereignisgraphen umfasst, die Verhaltensdaten entsprechen, die in einem früheren Zeitperiode liegen und mit der Zeitperiode korrelieren.

10. Verfahren zum Erzeugen von Alarminformationen gemäß einem der Ansprüche 1 bis 9, wobei ein Verhaltensereignis, das mit den festgelegten Verhaltensereignissen in Zusammenhang steht, und eine Beziehung zwischen dem in Zusammenhang stehenden Verhaltensereignis und den festgelegten Verhaltensereignissen über den heterogenen Ereignisgraphen erfassbar ist.

11. Elektronisches Gerät (301), umfassend:
einen Speicher (332) zum Speichern eines Computerprogramms; und
einen Prozessor (322), der so konfiguriert ist, dass er das Computerprogramm ausführt, um das Verfahren zum Erzeugen von Alarminformationen gemäß einem der Ansprüche 1 bis 10 zu implementieren.

12. Speichermedium, auf dem computerausführbare Befehle gespeichert sind, die, wenn sie von einem Prozessor geladen und ausgeführt werden, das Verfahren zum Erzeugen von Alarminformationen gemäß einem der Ansprüche 1 bis 10 implementieren.

13. Computerprogrammprodukt, wobei das Computerprogrammprodukt, wenn es auf einer Endgerät-Vorrichtung ausgeführt wird, die Endgerät-Vorrichtung veranlasst, das Verfahren gemäß einem der Ansprüche 1 bis 10 auszuführen.

## Revendications

1. Procédé de génération d'informations d'alarme, comprenant les étapes consistant à :
extraire (S101) des données comportementales dans un terminal ;
construire (S102) un graphique hétérogène d'événements sur la base des données comportementales, dans lequel des bords dans le graphique hétérogène d'événements représentent des événements comportementaux, et des vertices dans le graphique hétérogène d'événements représentent les données comportementales associées aux événements comportementaux ;
déterminer (S103) une valeur anormale de chacun des événements comportementaux spécifiés dans le graphique hétérogène d'événements ; et
déterminer (S104) un événement comportemental spécifié dont la valeur anormale satisfait à une condition d'alarme à titre d'informations d'alarme,
dans lequel l'étape consistant à construire un graphique hétérogène d'événements sur la base des données comportementales comprend les opérations consistant à :
diviser (S201), sur la base d'un temps d'occurrence de comportements, les données comportementales en blocs correspondant à des périodes temporelles ;
construire (S202) des graphiques hétérogènes d'événements de périodes temporelles sur la base des données comportementales correspondant aux périodes temporelles respectives ; et
constituer (S202) le graphique hétérogène d'événements avec les graphiques hétérogènes d'événements de périodes temporelles.

2. Procédé de génération d'informations d'alarme selon la revendication 1, dans lequel l'étape consistant à déterminer un événement comportemental spécifié dont la valeur anormale satisfait à une condition d'alarme à titre d'informations d'alarme comprend l'opération consistant à :
trier des valeurs anormales des événements comportementaux spécifiés dans un ordre décroissant, et déterminer des événements comportementaux spécifiés correspondant à un nombre présélectionné supérieur de valeurs anormales à titre d'informations d'alarme.

3. Procédé de génération d'informations d'alarme selon la revendication 1 ou 2, dans lequel les informations d'événements comportementaux spécifiés sont l'ensemble des événements comportementaux dans le graphique hétérogène d'événements ; ou, les événements comportementaux spécifiés sont l'ensemble des événements comportementaux correspondant aux informations d'alarme initiales acquises.

4. Procédé de génération d'informations d'alarme selon l'une quelconque des revendications 1 à 3, dans lequel l'étape consistant à déterminer une valeur anormale de chacun des événements comportementaux spécifiés dans le graphique hétérogène d'événements comprend l'opération consistant à :
acquérir une probabilité d'occurrence de l'événement comportemental spécifié sur la base du graphique hétérogène d'événements ; et
déterminer une valeur anormale de l'événement comportemental spécifié sur la base de la probabilité d'occurrence.

5. Procédé de génération d'informations d'alarme selon la revendication 4, dans lequel l'étape consistant à acquérir une probabilité d'occurrence de l'événement comportemental spécifié sur la base du graphique hétérogène d'événements comprend les opérations consistant à :
acquérir (S301) une activité d'un vertex de source de l'événement comportemental spécifié, une activité d'un vertex de destination de l'événement comportemental spécifié, et une première fréquence à laquelle l'événement comportemental spécifié se produit dans le graphique hétérogène d'événements, sur la base du graphique hétérogène d'événements ;
acquérir (S302) une seconde fréquence à laquelle un événement comportemental similaire correspondant à l'événement comportemental spécifié se produit dans le graphique hétérogène d'événements, le vertex de source de l'événement comportemental similaire ayant la même étiquette que le vertex de source de l'événement comportemental spécifié, le vertex de destination de l'événement comportemental similaire ayant la même étiquette que le vertex de destination de l'événement de comportement spécifié, et le bord de l'événement comportemental similaire ayant la même étiquette que le bord de l'événement comportemental spécifié ; et
acquérir (S303) la probabilité d'occurrence de l'événement comportemental spécifié sur la base de l'activité du vertex de source, de l'activité du vertex de destination, de la première fréquence et de la seconde fréquence.

6. Procédé de génération d'informations d'alarme selon la revendication 4, dans lequel l'étape consistant à déterminer une valeur anormale de l'événement comportemental spécifié sur la base de la probabilité d'occurrence comprend l'opération consistant à :
déterminer (S304) la valeur anormale de l'événement comportemental spécifié sur la base de la probabilité d'occurrence et d'une corrélation négative entre la probabilité d'occurrence et la valeur anormale.

7. Procédé de génération d'informations d'alarme selon l'une quelconque des revendications 1 à 6, dans lequel l'étape consistant à extraire des données comportementales dans un terminal comprend l'opération consistant à :
extraire les données comportementales dans le terminal à partir d'un journal tiers et d'un journal API.

8. Procédé de génération d'informations d'alarme selon l'une quelconque des revendications 5 à 7, dans lequel l'étape consistant à acquérir la probabilité d'occurrence de l'événement comportemental spécifié sur la base de l'activité du vertex de source, de l'activité du vertex de destination, de la première fréquence et de la seconde fréquence, comprend d'acquérir la probabilité d'occurrence de l'événement comportemental spécifié selon une formule act_out*act_in*(freq/freq_sim),
dans lequel
act_out désigne l'activité du vertex de source du l'événement comportemental spécifié ;
act_in désigne l'activité du vertex de destination de l'événement comportemental spécifié ;
freq désigne la première fréquence ; et
freq_sim désigne la seconde fréquence.

9. Procédé de génération d'informations alarme selon l'une quelconque des revendications 1 à 8, dans lequel l'étape consistant à construire un graphique hétérogène d'événements de périodes temporelles correspondant à une période temporelle sur la base des données comportementales correspondant à la période temporelle comprend l'opération consistant à introduire, dans le graphique hétérogène d'événements de périodes temporelle, des contenus correspondant à des données comportementales qui sont dans une période temporelle précédente et qui sont corrélés à la période temporelle.

10. Procédé de génération d'informations d'alarme selon l'une quelconque des revendications 1 à 9, dans lequel un événement comportemental en lien avec des événements comportementaux spécifiés et une relation entre l'événement comportemental lié et les événements comportementaux spécifiés peuvent être acquis au moyen du graphique hétérogène d'événements.

11. Dispositif électronique (301), comprenant :
une mémoire (332) destinée à stocker un programme d'ordinateur ; et
un processeur (322) configuré pour exécuter le programme d'ordinateur afin de mettre en œuvre le procédé de génération d'informations d'alarme selon l'une quelconque des revendications 1 à 10.

12. Support de stockage ayant, stockées sur celui-ci, des instructions exécutables par ordinateur qui, quand elles sont chargées et exécutées par un processeur, mettent en œuvre le procédé de génération d'informations d'alarme selon l'une quelconque des revendications 1 à 10.

13. Produit de programme d'ordinateur, dans lequel le produit de programme d'ordinateur, quand il fonctionne sur un dispositif terminal, amène le dispositif terminal à exécuter le procédé selon l'une quelconque des revendications 1 à 10.
